Europäisches Patentamt

European Patent Office

Office européen des brevets

(19)

(11) Veröffentlichungsnummer : **0 470 476 B1**

## (12) EUROPÄISCHE PATENTSCHRIFT

(45) Veröffentlichungstag der Patentschrift :
**21.09.94 Patentblatt 94/38**

(51) Int. Cl.$^5$ : **H01F 1/053**

(21) Anmeldenummer : **91112716.5**

(22) Anmeldetag : **29.07.91**

(54) Verfahren zur Herstellung eines anisotropen Magnetmaterials auf Basis des Stoffsystems Sm-Fe-N.

(30) Priorität : **09.08.90 DE 4025277**

(43) Veröffentlichungstag der Anmeldung :
**12.02.92 Patentblatt 92/07**

(45) Bekanntmachung des Hinweises auf die
Patenterteilung :
**21.09.94 Patentblatt 94/38**

(84) Benannte Vertragsstaaten :
**AT DE FR GB IT NL**

(56) Entgegenhaltungen :
**IEEE TRANSACTIONS ON MAGNETICS. Bd.
23, Nr. 5, September 1987, NEW YORK USSeiten 3098 - 3100; S.HIGANO ET AL: 'MAGNETIC
PROPERTIES OF RE-TM-N SYSTEM'
PATENT ABSTRACTS OF JAPAN vol. 9, no.
310 (E-364)(2033) 6. Dezember 1985
PROCEEDINGS OF THE NATO ADVANCED
STUDY INSTITUTE ON THE SCIENCE**

(56) Entgegenhaltungen :
**& TECHNOLOGY OF NANOSTRUCTURED MA-
GNETIC MATERIALS 24. Juni1990, KRETA GR
Seiten 439 - 458; J.M.D.COEY: 'intermetallic
compounds andcrystal field interactions'
PATENT ABSTRACTS OF JAPAN vol. 9, no.
287 (C-314)(2010) 14. November 1985
PATENT ABSTRACTS OF JAPAN vol. 12, no.
153 (E-607)(3000) 11. Mai 1988**

(73) Patentinhaber : **SIEMENS
AKTIENGESELLSCHAFT
Wittelsbacherplatz 2
D-80333 München (DE)**

(72) Erfinder : **Wecker, Joachim, Dr.
Georg-Krauss-Strasse 2
W-8520 Erlangen (DE)**
Erfinder : **Schultz, Ludwig, Dr.
Amselweg 22
W-8526 Bubenreuth (DE)**
Erfinder : **Katter, Matthias, Dipl.-Ing.
Obleiweg 6
W-8520 Dechsendorf (DE)**
Erfinder : **Schnitzke, Kurt, Dipl.-Ing. (FH)
Geissbergweg 3
W-8524 Neunkirchen/Brand (DE)**

## Beschreibung

Verfahren zur Herstellung eines anisotropen Magnetmaterials auf Basis des Stoffsystems Sm-Fe-N

Die Erfindung bezieht sich auf ein Verfahren zur Herstellung eines anisotropen Magnetmaterials auf Basis des Stoffsystems Sm-Fe-N mit einer kristallinen, hartmagnetischen Phase mit $Th_2Zn_{17}$-Kristallstruktur, in deren Kristallgitter N-Atome eingebaut werden, indem ein Vorprodukt des herzustellenden Magnetmaterials mit einer zweikomponentigen Sm-Fe-Phase mit einer dem Aufbau der Kristallstruktur zumindest weitgehend entsprechenden Zusammensetzung in einer stickstoffhaltigen Atmosphäre erhitzt wird.

Seit einigen Jahren sind Magnetwerkstoffe auf Basis von Stoffsystemen bekannt, die ein Seltenes Erdmetall und ein Übergangsmetall enthalten und sich durch hohe Koerzitivfeldstärken $H_{ci}$ und hohe Energieprodukte $(B*H)_{max}$ auszeichnen. Hauptvertreter sind als binäres Stoffsystem Co-Sm und als ternäres Stoffsystem Nd-Fe-B. Ihre hartmagnetischen Eigenschaften beruhen auf intermetallischen Verbindungen mit einer hohen magnetischen Anisotropie und einer hohen Gefügeausbildung in den jeweiligen Werkstoffen. Die Herstellung dieser Magnetwerkstoffe kann z.B. durch Sintern von Pulvern der Komponenten des entsprechenden Stoffsystems erfolgen (vgl. z.B. EP-A-0 134 304). Darüber hinaus ist es auch möglich, entsprechende Magnetwerkstoffe mittels einer sogenannten Rascherstarrungstechnik herzustellen (vgl. z.B. EP-A-0 284 832).

Bei den entsprechenden ternären Magnetwerkstoffen wird auch das Stoffsystem Sm-Fe-Ti diskutiert (vgl. "J.Appl.Phys.", Vol. 64, No. 10, 1988, Seiten 5720 bis 5722). Seit kurzem ist auch die Existenz von $Sm_2Fe_{17}N_x$ als Magnetwerkstoff bekannt. Dieses Material besitzt die bekannte $Th_2Zn_{17}$-Kristallstruktur. Seine intrinsischen Eigenschaften sind deutlich besser als die von $Nd_2Fe_{14}B$. So liegen z.B. das Anisotropiefeld bei Raumtemperatur bei etwa 12 T, die Curietemperatur bei etwa 470 °C und die Sättigungsmagnetisierung bei etwa 1,54 T. Zur Herstellung von $Sm_2Fe_{17}N_x$ ist es bekannt, $Sm_2Fe_{17}$ als Ausgangsmaterial zu erschmelzen. Das so erhaltene Vorprodukt wird dann in einer $N_2$- oder $NH_3$-Atmosphäre erhitzt, wobei sich die gewünschte hartmagnetische Phase durch Einbau von bis zu 2,7 N-Atomen pro Formeleinheit in die Gitterstruktur des Vorproduktes bildet. Mit der Nitrierung des $Sm_2Fe_{17}$-Vorproduktes läßt sich außerdem eine uniaxiale magnetische Anisotropie der hartmagnetischen Phase erreichen (vgl. Vortrag von J.M.D.Coey während Tagung des "Nato Advanced Study Institute on the Science and Technology of Nanostructured Magnetic Materials", 25.6. bis 7.7.1990, Heraklion, Kreta, GR).

Aufgabe der vorliegenden Erfindung ist es, dieses bekannte Verfahren zur Herstellung eines hartmagnetischen Materials auf Basis des Stoffsystems Sm-Fe-N dahingehend auszugestalten, daß auf verhältnismäßig einfache Weise die Ausbildung der gewünschten hartmagnetischen Phase zu gewährleisten und dabei ein Material mit hoher Koezitivfeldstärke $H_{ci}$ von insbesondere über 5 kA/cm zu erhalten ist, das die Herstellung von anisotropen kompakten Sm-Fe-N-Magneten ermöglicht.

Diese Aufgabe wird für ein Verfahren mit den eingangs genannten Merkmalen erfindungsgemäß dadurch gelöst, daß zunächst als Vorprodukt ein Sinterkörper mit der zweikomponentigen Sm-Fe-Phase aus in einem Magnetfeld ausgerichteten Sm-Fe-Pulver hergestellt wird und daß dann dieser Sinterkörper in der stickstoffhaltigen Atmosphäre in die hartmagnetische Phase des Stoffsystems Sm-Fe-N überführt wird.

Die Erfindung geht dabei von der bekannten Tatsache aus, daß sich mit dem Einbau von N-Atomen innerhalb der bekannten $Th_2Zn_{17}$-Kristallstruktur ohne Änderung des Gittertyps ein Material gewinnen läßt, das hartmagnetische Eigenschaften besitzt. Um ein anisotropes kompaktes Material zu erhalten, soll gemäß der Erfindung ein Vorprodukt mit der binären $Sm_2Fe_{17}$-Phase ausgebildet werden, das bereits kristallographisch orientiert ist. Hierzu wird ein über an sich bekannte Schritte der Pulvermetallurgie gewonnenes Pulver einer dem Vorprodukt entsprechenden Vorlegierung hergestellt und in einem angelegten Magnetfeld ausgerichtet. Da nämlich die binäre $Sm_2Fe_{17}$-Phase eine planare Anisotropie aufweist, wird bei der Ausrichtung die kristallographische c-Achse radial zu dem Magnetfeld orientiert. Aus diesem so orientierten Pulver wird anschließend durch Sintern ein Formkörper erstellt. Dieser Formkörper wird dann bei erhöhter Temperatur nitriert. Dabei wird die c-Achse zur Vorzugsachse der Magnetisierung, die auch als magnetisch leichte Richtung bezeichnet wird. Auf diese Weise läßt sich ein kompaktes Produkt aus dem gewünschten hartmagnetischen Material mit einer radialen Vorzugsorientierung erhalten.

Vorteilhafte Ausgestaltungen des erfindungsgemäßen Verfahrens gehen aus den Unteransprüchen hervor.

Das erfindungsgemäße Verfahren wird nachfolgend anhand von Ausführungsbeispielen noch weiter erläutert, wobei auf die schematische Zeichnung Bezug genommen wird. Aus deren Figur 1 ist ein ausgerichteter Sinterkörper ersichtlich, dessen Kristallorientierung in Figur 2 angedeutet ist. Die Figuren 3 und 4 zeigen Vorrichtungen zur Nitrierung des Sinterkörpers.

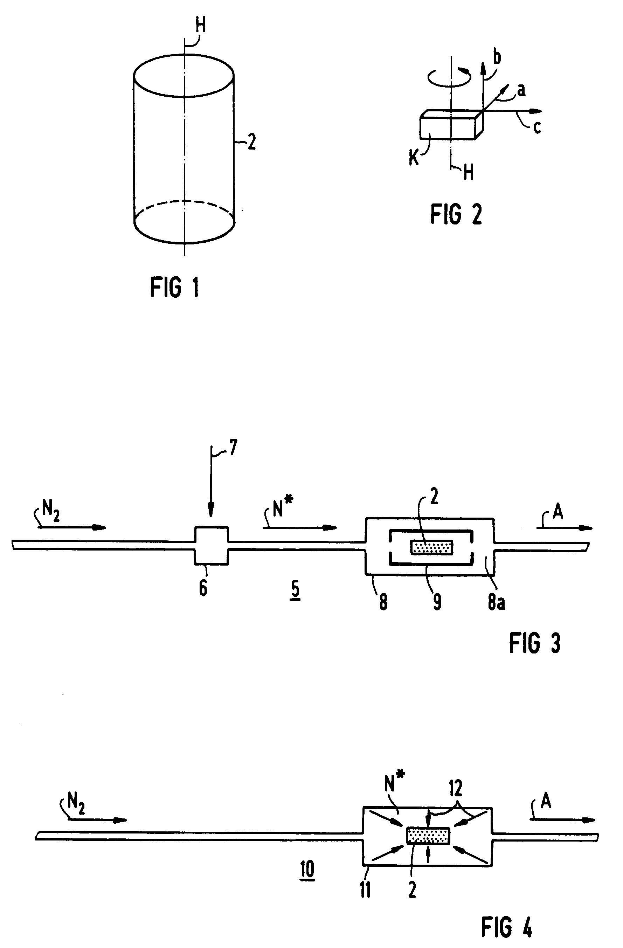

Um zu einem kompakten, hartmagnetischen Formkörper des Stoffsystems Sm-Fe-N zu gelangen, wird zunächst ein Vorprodukt mit einer $Sm_2Fe_{17}$-Phase in Form eines in Figur 1 schematisch angedeuteten zylinderförmigen Sinterkörpers 2 hergestellt. Hierzu wird von Pulvern aus oder mit den beteiligten Komponenten ausgegangen, die hinreichend rein sind (z.B. jeweils mit mindestens 99,5 % Reinheit). Entweder werden elementare Pulver verwendet, oder es können auch die beteiligten Elemente in Form von Legierungen und/oder Verbindungen vorliegen. Die beispielsweise pulverförmigen Ausgangskomponenten des Vorproduktes werden dann in einer Ar-Atmosphäre zu einer Vorlegierung erschmolzen. Die Anteile der einzelnen Komponenten werden dabei so gewählt, daß die Vorlegierung die Zusammensetzung $Sm_xFe_{100-x}$ aufweist, wobei x zwischen 10 und 20 (jeweils in Atom-%) liegt. Zu einem induktiven Erschmelzen können pyrolythische BN- oder $Al_2O_3$-Tiegel verwendet werden. Auch ein Erschmelzen in einem Lichtbogenofen ist möglich. Zur Homogenisierung kann die Vorlegierung mehrfach aufgeschmolzen werden, wobei eventuelle Sm- Verluste durch Sm-Zugaben kompensiert werden können. Die so erschmolzene Vorlegierung, die schließlich beispielsweise die Zusammensetzung $Sm_{2,2}Fe_{17}$ aufweist, wird nun in eine geeignete Mahlvorrichtung, einen sogenannten Attritor, gegeben und auf durchschnittliche Korngrößen zwischen 0,2 µm und 50 µm, vorzugsweise zwischen 1 µm und 10 µm gemahlen.

Anschließend wird das Pulver des Vorproduktes unter Schutzgas wie z.B. Ar in einem magnetischen Gleichfeld so ausgerichtet, daß die kristallographische c-Achse radial zum angelegten Magnetfeld zu liegen kommt. Die für diese Ausrichtung zu wählende magnetische Induktion des Feldes liegt im allgemeinen zwischen 0,2 Tesla und 2 Tesla, beispielsweise bei etwa 1 Tesla. Das Magnetfeld muß dabei parallel zu einer in Figur 1 mit H bezeichneten gestrichelten Linie gerichtet sein. Die sich bei der Magnetfeldbehandlung einstellende Kristallorientierung ist aus Figur 2 ersichtlich, in der die Magnetfeldrichtung wiederum durch eine gestrichelte Linie H sowie die Lage der einzelnen Achsen eines Kristalls K durch mit a, b und c gekennzeichnete Pfeile veranschaulicht sind. Gegenüber der in der Figur gezeigten Lage des Systems der Kristallachsen kann dieses System auch um die Linie H gedreht sein.

Das so in dem Magnetfeld ausgerichtete Pulver wird danach oder gegebenenfalls auch bereits während der Ausrichtung in dem Magnetfeld durch ein mechanisches Preßverfahren zu einem dichten Preßling mit einer gewünschten Geometrie, z.B. mit Zylinderform, kompaktiert. Vorteilhaft ist es, wenn die Preßrichtung im wesentlichen senkrecht zur Richtung des Magnetfeldes H gewählt wird. Gegebenenfalls kann man aber auch eine Preßrichtung parallel zur Magnetfeldrichtung vorsehen.

Dieser Preßling wird dann gesintert und in den in Figur 1 gezeigten Sinterkörper 2 überführt. Die konkreten Sinterzeiten und -temperaturen hängen dabei von der angestrebten Porosität bzw. Dichte des Sinterkörpers ab. Im allgemeinen wird das Sintern bei einer Temperatur zwischen 1000 °C und 1300 °C, beispielsweise bei 1100 °C vorgenommen. Hierbei liegen die Sinterzeiten zwischen 10 Minuten und 10 Stunden, beispielsweise für ein 1100 °C-Sintern bei etwa einer Stunde. Es ist festzustellen, daß kürzere Zeiten und niedrigere Temperaturen zu poröseren Sinterkörpern führen, die sich leichter nitrieren lassen.

Am Ende der Sinterbehandlung liegt dann ein entsprechendes kompaktes Vorprodukt mit einer weichmagnetischen Phase mit $Th_2Zn_{17}$-Kristallstruktur vor. In einem weiteren Schritt soll anschließend dieses Vorprodukt in einer Stickstoff-Atmosphäre geglüht werden, um die gewünschte hartmagnetische $Sm_2Fe_{17}N_x$-Phase zu erhalten. Dabei ist festzustellen, daß diese Verbindung für Stickstoffkonzentrationen x existiert, für die $0 < x \leqq 3$ ist (x in N-Atomen pro Einheitszelle). Da oberhalb von etwa 600 °C diese Phase instabil ist, muß die zu wählende Glühtemperatur unterhalb dieser Temperatur und zweckmäßigerweise oberhalb von 300 °C liegen. Eine Nitrierung kompakter Körper bei den zugelassenen Temperaturen läuft jedoch sehr langsam ab. Diese Zeiten reduzieren sich auf einige Stunden, wenn der Sinterkörper eine Dichte aufweist, die unter 100 % liegt, da sich dann der Stickstoff in Rissen und Poren dieses Körpers ungehindert ausbreiten kann und nur die Distanz zwischen benachbarten Rissen oder Poren durch Diffusion überwunden werden muß.

Außerdem ist es von Vorteil, wenn der Nitrierungsprozeß in einer reaktiven Stickstoffatmosphäre durchgeführt wird. Eine entsprechende Vorrichtung ist in Figur 3 als Schnitt nur schematisch ausgeführt. Bei dieser allgemein mit 5 bezeichneten Vorrichtung wird molekularer Stickstoff $N_2$ zunächst in einen Reaktionsraum 6 einer Gasaktivierungseinrichtung eingeleitet, um ihn dort in reaktive Komponenten wie ionisierte Atome und Moleküle oder freie Stickstoffradikale zu überführen. Hierzu kann vorzugsweise eine Mikrowellen- oder Hochfrequenzanregung vorgesehen werden. Die entsprechende Energieeinspeisung in den Reaktionsraum 6 ist durch eine gepfeilte Linie 7 angedeutet. Der so aktivierte, mit N* bezeichnete Stickstoff wird dann einem Sinterofen 8 zugeführt, in dessen Innenraum 8a der Sinterkörper 2 angeordnet ist. Dieser Sinterkörper kann sich dabei vorteilhaft in einem Quarzgefäß 9 befinden, das die Rekombination der angeregten Stickstoffatome und -moleküle verhindert. In der Figur ist ferner noch das aus dem Sinterofen wieder austretende Abgas durch eine mit A bezeichnete gepfeilte Linie angegeben. Die für den Nitrierungsprozeß mit aktiviertem Stickstoff konkret zu wählenden Zeiten sind dabei von der Nitrierungstemperatur und insbesondere auch von der Dichte des Sinterkörpers abhängig. So liegen z.B. für 90 bis 95 % dichte Sinterkörper die Nitrierungszeiten im allgemeinen zwischen 10 Minuten und 1000 Stunden, vorzugsweise zwischen 5 Stunden und 30 Stunden. Z.B. ist eine Nitrierung eines Sinterkörpers mit 90 % Dichte bei 500 °C während 10 Stunden ausreichend, um in dem End-

EP 0 470 476 B1

produkt die gewünschte hartmagnetische $Sm_2Fe_{17}N_x$-Phase zu erhalten und gleichzeitig die gewünschte radiale Vorzugsrichtung der Magnetisierung einzustellen.

Gemäß einem konkreten Ausführungsbeispiel wurden nach dem erfindungsgemäßen Verfahren sechs zylinderförmige nitrierte $Sm_{2,2}Fe_{17}$-Probekörper mit jeweils 5 mm axialer Länge und 3 mm Durchmesser hergestellt. Die in radialer Richtung gemessenen magnetischen Werte dieser Probekörper sind in der nachfolgenden Tabelle 1 aufgelistet. Dabei bedeuten $T_a$ die Temperatur des Nitrierungsprozesses, $t_a$ die entsprechende Glühzeit dieses Prozesses, $P_w$ die Leistung eines Mikrowellenresonators zur Ausbildung einer reaktiven Stickstoffatmosphäre, $J_r$ die magnetische Remanenz und $H_{ci}$ die Koerzitivfeldstärke. Wie insbesondere aus einem Vergleich der Probe Nr. 6 mit den übrigen fünf Probennummern zu ersehen ist, werden bei fehlenden reaktiven Stickstoffkomponenten ($P_w = 0$) deutlich schlechtere Magnetwerte ($J_r$, $H_{ci}$) erhalten.

## Tabelle 1

| Proben- nr. | $T_a$ [°C] | $t_a$ [h] | $P_w$ [W] | $J_r$ [T] | $H_{ci}$ [kOe] |
|---|---|---|---|---|---|
| 1 | 500 | 1 | 300 | 0.89 | 14.3 |
| 2 | 500 | 10 | 300 | 1.04 | 18.1 |
| 3 | 500 | 10 | 500 | 1.09 | 20.6 |
| 4 | 300 | 20 | 500 | 0.81 | 10.4 |
| 5 | 400 | 10 | 300 | 0.93 | 15.2 |
| 6 | 500 | 10 | 0 | 0.21 | 5.3 |

Aus Figur 4 geht eine weitere Vorrichtung zur Durchführung des erfindungsgemäßen Verfahrens hervor. Diese allgemein mit 10 bezeichnete Vorrichtung unterscheidet sich von der in Figur 3 dargestellten Vorrichtung 5 lediglich dadurch, daß die Einrichtung zur Ausbildung der reaktiven Stickstoffatmosphäre in den Sinterofen integriert ist. Dementsprechend befindet sich gemäß Figur 4 der Sinterkörper 2 in einem Mikrowellenofen 11, wobei die entsprechende Energieeinspeisung in den Sinterkörper durch gepfeilte Linien 12 angedeutet ist.

Gemäß den erläuterten Ausführungsbeispielen wurde davon ausgegangen, daß die Nitrierung des Sinterkörpers bei einer einzigen, verhältnismäßig hohen Temperatur durchgeführt wird. Es ist jedoch festzustellen, daß sich die $Th_2Zn_{17}$-Phase bei einer zu schnellen Nitration, beispielsweise bei einer Temperatur oberhalb von 500 °C, gegebenenfalls zersetzen kann. Der Grund hierfür ist darin zu sehen, daß die thermische Stabilität der Verbindung $Sm_2Fe_{17}N_x$ mit sinkendem N-Gehalt deutlich abnimmt. So liegt z. B. die Zersetzungstemperatur für x = 0,4 um etwa 100 °C niedriger als für x = 2,94. Aus diesem Grunde sind möglichst hohe x-Werte (in der Nähe von x = 3) als vorteilhaft anzusehen. Die nachfolgende Tabelle 2 zeigt die deutliche Abhängigkeit der Zersetzungstemperatur $T_d$ [in °C] von der Stickstoffkonzentration x [in Atomen pro Einheitszelle]. Bei den angegebenen Meßwerten handelt es sich um ungefähre Werte, oberhalb derer eine Zersetzung eintritt (Onset-Werte):

## Tabelle 2

| x [N-Atome pro Einheitszelle] | 0,5 | 1 | 1,5 | 2 | 2,5 |
|---|---|---|---|---|---|
| $T_d$ [°C] | 602 | 627 | 643 | 659 | 673 |

Wegen dieser Abhängigkeit der thermischen Stabilität der $Sm_2Fe_{17}N_x$-Verbindung von der Stickstoffkonzentration ist es besonders vorteilhaft, wenn der Nitrierungsprozeß des das Vorprodukt bildenden Sinterkör-

4

pers hinsichtlich der Temperaturverhältnisse zweistufig durchgeführt wird, wobei für die erste Stufe eine insbesondere um mindestens 50 °C niedrigere Temperatur als für die zweite Stufe gewählt wird. Ein Ausführungsbeispiel einer entsprechenden zweistufigen Nitrierung eines Sinterkörpers vorbestimmter Dichte ist nachfolgend angegeben:

1. Nitrierungsstufe

Die Nitrierung erfolgt bei einer Temperatur $T_{n1}$ zwischen 300 °C und 400 °C während einer Dauer $t_{n1}$ zwischen 10 und 1000 Stunden, wobei die konkret zu wählende Zeit von der Dichte des Sinterkörpers abhängt. D. h., je dichter der Körper ist, desto längere Nitrierungszeiten sind erforderlich. Die N-Beladung zumindest im Zentrum des Sinterkörpers sollte mindestens bis zu einer Konzentration x = 1,5 erfolgen. Entsprechende Beispiele gehen aus der folgenden Tabelle 3 hervor:

## Tabelle 3

| Dichte [%] | 95 | 95 | 90 | 90 |
|---|---|---|---|---|
| $T_{n1}$ [°C] | 400 | 350 | 400 | 350 |
| $t_{n1}$ [h] | 64 | 256 | 16 | 64 |

2. Nitrierungsstufe

Eine weitere Beladung mit Stickstoff erfolgt bis zur maximal möglichen Konzentration von $x \leqq 3$ bei einer Temperatur $T_{n2}$, die höher liegt als die Temperatur $T_{n1}$ der ersten Nitrationsstufe. Beispielsweise wird bei einem 90 % dichten Sinterkörper eine Temperatur $T_{n2}$ von 500 °C während einer Dauer $t_{n2}$ von 16 Stunden vorgesehen.

Bei diesem zweistufigen Nitrierungsprozeß wird in dem ersten Nitrierungsschritt vorteilhaft die thermische Stabilität des $Sm_2Fe_{17}$-Nitrids soweit erhöht, daß sich die hartmagnetische Phase bei der im zweiten Nitrierungsschritt zur vollständigen Nitrierung notwendigen höheren Temperatur $T_{n2}$ nicht zersetzen kann.

## Patentansprüche

1. Verfahren zur Herstellung eines anisotropen Magnetmaterials auf Basis des Stoffsystems Sm-Fe-N mit einer kristallinen, hartmagnetischen Phase mit $Th_2Zn_{17}$-Kristallstruktur, in deren Kristallgitter N-Atome eingebaut werden, indem ein Vorprodukt des herzustellenden Magnetmaterials mit einer zweikomponentigen Sm-Fe-Phase mit einer dem Aufbau der Kristallstruktur zumindest weitgehend entsprechenden Zusammensetzung in einer stickstoffhaltigen Atmosphäre erhitzt wird, **dadurch gekennzeichnet,** daß zunächst als Vorprodukt ein Sinterkörper (2) mit der zweikomponentigen Sm-Fe-Phase aus in einem Magnetfeld(H) ausgerichtetem Sm-Fe-Pulver hergestellt wird und daß dann dieser Sinterkörper (2) in der stickstoffhaltigen Atmosphäre in die hartmagnetische Phase des Stoffsystems Sm-Fe-N überführt wird.

2. Verfahren nach Anspruch 1, **dadurch gekennzeichnet,** daß zur Ausbildung des Sinterkörpers (2) eine Vorlegierung mit der zweikomponentigen Sm-Fe-Phase erschmolzen wird, diese Vorlegierung anschließend zu Pulver mechanisch zerkleinert wird, das Pulver in dem Magnetfeld (H) ausgerichtet wird und schließlich das ausgerichtete und kompaktierte Pulver zu dem Sinterkörper (2) gesintert wird.

3. Verfahren nach Anspruch 1 oder 2, **dadurch gekennzeichnet,** daß die Vorlegierung zu Pulver mit durchschnittlichen Korngrößen zwischen 0,2 µm und 50 µm, vorzugsweise zwischen 1 µm und 10 µm gemahlen wird.

4. Verfahren nach einem der Ansprüche 1 bis 3, **dadurch gekennzeichnet,** daß das Pulver zumindest weitgehend senkrecht zur Richtung des Magnetfeldes (H) kompaktiert wird.

5. Verfahren nach einem der Ansprüche 2 bis 4, **dadurch gekennzeichnet,** daß die Kompaktierung des Pulvers der Vorlegierung zumindest teilweise während des Ausrichtens des Pulvers in dem Magnetfeld (H)

EP 0 470 476 B1

vorgenommen wird.

6. Verfahren nach einem der Ansprüche 1 bis 5, **dadurch gekennzeichnet,** daß ein Magnetfeld (H) mit einer magnetischen Induktion zwischen 0,2 Tesla und 2 Tesla vorgesehen wird.

7. Verfahren nach einem der Ansprüche 1 bis 6, **dadurch gekennzeichnet,** daß die Sinterbehandlung bei einer Temperatur zwischen 1000 °C und 1300 °C vorgenommen wird.

8. Verfahren nach einem der Ansprüche 1 bis 7, **dadurch gekennzeichnet,** daß die Sinterbehandlung während einer Dauer zwischen 10 Minuten und 10 Stunden durchgeführt wird.

9. Verfahren nach einem der Ansprüche 1 bis 8, **dadurch gekennzeichnet,** daß die Ausbildung der hartmagnetischen Phase in einer Atmosphäre mit reaktivem Stickstoff (N*) vorgenommen wird.

10. Verfahren nach Anspruch 9, **dadurch gekennzeichnet,** daß die reaktive Stickstoffatmosphäre (N*) mittels einer Mikrowellen- oder Hochfrequenzanregung von molekularem Stickstoff ($N_2$) erzeugt wird.

11. Verfahren nach einem der Ansprüche 1 bis 10, **dadurch gekennzeichnet,** daß die Ausbildung der hartmagnetischen Phase in der stickstoffhaltigen Atmosphäre bei einer Temperatur zwischen 300 °C und 600 °C vorgenommen wird.

12. Verfahren nach Anspruch 11, **gekennzeichnet durch** einen zweistufigen Prozeß zur Ausbildung der hartmagnetischen Phase, wobei in der ersten Stufe eine Temperatur vorgesehen wird, die niedriger als die für die zweite Stufe zu wählende Temperatur ist.

13. Verfahren nach Anspruch 12, **dadurch gekennzeichnet,** daß für die erste Stufe eine Temperatur zwischen 300 °C und 400 °C vorgesehen wird.

14. Verfahren nach einem der Ansprüche 11 bis 13, **dadurch gekennzeichnet,** daß die Wärmebehandlung zur Ausbildung der hartmagnetischen Phase während einer von der Dichte des Sinterkörpers abhängigen Gesamtdauer zwischen 10 Minuten und 1000 Stunden, vorzugsweise zwischen 5 Stunden und 30 Stunden, vorgenommen wird.

## Claims

1. Process for producing an anisotropic magnetic material based on the substance system Sm-Fe-N with a crystalline, hard magnetic phase with a $Th_2Zn_{17}$ crystal structure, in the crystal lattice of which there are incorporated N atoms, in which process a preliminary product of the magnetic material to be produced with a two-component Sm-Fe phase with a composition corresponding at least largely to the construction of the crystal structure is heated in an atmosphere containing nitrogen, characterised in that firstly a sintered body (2) with the two-component Sm-Fe phase is produced as a preliminary product from an Sm-Fe powder oriented in a magnetic field (H) and in that this sintered body (2) is then converted in the atmosphere containing nitrogen into the hard magnetic phase of the substance system Sm-Fe-N.

2. Process according to claim 1, characterised in that to form the sintered body (2) a pre-alloy with the two-component Sm-Fe phase is produced by a melting process, this pre-alloy is then crushed mechanically to powder, the powder is oriented in the magnetic field (H) and finally the oriented and compacted powder is sintered to form the sintered body (2).

3. Process according to claim 1 or 2, characterised in that the pre-alloy is ground to form powder with an average grain size of between 0.2 μm and 50 μm, preferably between 1 μm and 10 μm.

4. Process according to one of claims 1 to 3, characterised in that the powder is compacted at least largely perpendicularly to the direction of the magnetic field (H).

5. Process according to one of claims 2 to 4, characterised in that the compacting of the powder of the pre-alloy is undertaken at least partially whilst orienting the powder in the magnetic field (H).

6. Process according to one of claims 1 to 5, characterised in that a magnetic field (H) is provided with a

6

magnetic induction of between 0.2 Tesla and 2 Tesla.

7. Process according to one of claims 1 to 6, characterised in that the sintering treatment is undertaken at a temperature of between 1000°C and 1300°C.

8. Process according to one of claims 1 to 7, characterised in that the sintering treatment is carried out for a period of between 10 minutes and 10 hours.

9. Process according to one of claims 1 to 8, characterised in that the formation of the hard magnetic phase is undertaken in an atmosphere with reactive nitrogen (N∗).

10. Process according to claim 9, characterised in that the reactive nitrogen atmosphere (N∗) is produced by means of a microwave excitation or radio-frequency excitation of molecular nitrogen ($N_2$).

11. Process according to one of claims 1 to 10, characterised in that the formation of the hard-magnetic phase in the atmosphere containing nitrogen is undertaken at a temperature of between 300°C and 600°C.

12. Process according to claim 11, characterised by a two-stage process for forming the hard magnetic phase, wherein in the first stage a temperature is provided, which is lower than the temperature to be selected for the second stage.

13. Process according to claim 12, characterised in that a temperature of between 300°C and 400°C is provided for the first stage.

14. Process according to one of claims 11 to 13, characterised in that the heat treatment for forming the hard magnetic phase is undertaken for a total period, dependent on the density of the sintered body, of between 10 minutes and 1000 hours, preferably between 5 hours and 30 hours.

## Revendications

1. Procédé de fabrication d'un matériau magnétique anisotrope et à base du système de substances Sm-Fe-N avec une phase cristalline à magnétisme dur ayant une structure cristalline $Th_2Zn_{17}$, dans le réseau cristallin de laquelle sont incorporés des atomes N, en faisant chauffer dans une atmosphère contenant de l'azote un précurseur du matériau magnétique à fabriquer avec une phase Sm-Fe à deux composants, et ayant une composition correspondant au moins dans une large mesure à la constitution de la structure cristalline, caractérisé en ce qu'en premier lieu on réalise comme précurseur un corps fritté (2) avec la phase Sm-Fe à deux composants à partir d'une poudre de Sm-Fe orientée dans un champ magnétique(H) et en ce qu'ensuite ce corps fritté (2) est transformé dans l'atmosphère contenant de l'azote en la phase à magnétisme dur du système de substances Sm-Fe-N.

2. Procédé selon la revendication 1, caractérisé en ce que, pour la formation du corps fritté (2), un alliage initial est fondu avec la phase Sm-Fe à deux composantes, cet alliage initial est ensuite broyé mécaniquement sous forme d'une poudre, la poudre est orientée dans le champ magnétique (H) et finalement la poudre orientée est compactée et frittée sous la forme du corps fritté (2).

3. Procédé selon la revendication 1 ou 2, caractérisé en ce que l'alliage initial est broyé sous forme d'une poudre ayant une granulométrie moyenne comprise entre 0,2 μm et 50 μm, de préférence entre 1 μm et 10 μm.

4. Procédé selon une des revendications 1 à 3, caractérisé en ce que la poudre est compactée, au moins dans une large mesure, perpendiculairement à la direction du champ magnétique (H).

5. Procédé selon une des revendications 2 à 4, caractérisé en ce que le compactage de la poudre d'alliage initial est effectué au moins en partie pendant l'orientation de la poudre dans le champ magnétique (H).

6. Procédé selon une des revendications 1 à 5, caractérisé en ce qu'un champ magnétique (H) ayant une induction magnétique comprise entre 0,2 Tesla et 2 Tesla est utilisé.

7. Procédé selon une des revendications 1 à 6, caractérisé en ce que le traitement par frittage est effectué à une température comprise entre 1000°C et 1300°C.

8. Procédé selon une des revendications 1 à 7, caractérisé en ce que le traitement par frittage est effectué pendant une durée comprise entre 10 minutes et 10 heures.

9. Procédé selon une des revendications 1 à 8, caractérisé en ce que la formation de la phase à magnétisme dur est effectuée dans une atmosphère avec azote réactif (N∗).

10. Procédé selon la revendication 9, caractérisé en ce que l'atmosphère d'azote réactif (N∗) est produite au moyen d'une excitation par microondes ou haute fréquence d'azote moléculaire ($N_2$).

11. Procédé selon une des revendications 1 à 10, caractérisé en ce que la formation de la phase à magnétisme dur est effectuée dans l'atmosphère contenant de l'azote à une température comprise entre 300°C et 600°C.

12. Procédé selon la revendication 11, caractérisé par un processus à deux étapes pour la formation de la phase à magnétisme dur, où dans la première étape il est prévu une température qui est plus petite que la température à choisir pour la seconde étape.

13. Procédé selon la revendication 12, caractérisé en ce que, pour la première étape, il est prévu une température comprise entre 300°C et 400°C.

14. Procédé selon une des revendications 11 à 13, caractérisé en ce que le traitement thermique pour la formation de la phase à magnétisme dur est effectué pendant une durée totale comprise, en fonction de la densité du corps fritté, entre 10 minutes et 1000 heures, de préférence entre 5 heures et 30 heures.

FIG 1

FIG 2

FIG 3

FIG 4